# EUROPEAN PATENT SPECIFICATION

(11) **EP 2 828 225 B1**
(45) Date of publication and mention of the grant of the patent: **07.03.2018**
(21) Application number: 14704181.8
(22) Date of filing: 24.01.2014
(51) Int. Cl.: C05F 17/00, C05F 11/04, A01G 1/04, C05F 9/04, C05F 3/00

(54) **METHOD FOR COMPOSTING SPENT MUSHROOM COMPOST**
VERFAHREN ZUR KOMPOSTIERUNG VON CHAMPIGNONKOMPOST
PROCÉDÉ DE COMPOSTAGE D'UN COMPOST ÉPUISÉ DE CHAMPIGNONS

(30) Priority: 24.01.2013 NL 2010177
(43) Date of publication of application: 28.01.2015
(73) Proprietor: Upcycling Gemert B.V., 5421 XC Gemert (NL)
(72) Inventor: VAN DEN BOOMEN, Henricus Nicolaas Cornelis, 5421 CN Gemert (NL); VAN DEN BOOMEN, Johannes Maria Franciscus, 5421 XC Gemert (NL); ELSINGA, Willem, 3853 JA Ermelo (NL)
(74) Representative: Algemeen Octrooi- en Merkenbureau B.V.
(86) International application number: PCT/NL2014/050036
(87) International publication number: WO 2014/116114

(56) References cited:
- EP-A2- 0 801 043
- WO-A1-2012/101213
- DE-A1- 3 511 718
- GB-A- 2 037 730
- JP-A- 2000 125 657
- DATABASE WPI Week 201240 Thomson Scientific, London, GB; AN 2012-C32996 XP002726708, & CN 102 344 316 A (SHANDONG BAOYUAN BIO AGRI TECHNOLOGY CO) 8 February 2012 (2012-02-08)
- DATABASE WPI Week 200120 Thomson Scientific, London, GB; AN 2001-194001 XP002726709, & JP 2000 327470 A (NAGANO H) 28 November 2000 (2000-11-28)

## Description

The present invention relates to a method for composting spent mushroom compost, also known as mushroom manure. According to another aspect, the present invention also relates to composted spent mushroom compost and to a method of drying used casing soil. Spent mushroom compost, or mushroom manure, is the nutrient medium or substrate for cultivating mushrooms and is usually composed of manure, such as horse manure, with straw, chicken manure and chalk. The spent mushroom compost is full of mycelium. Generally placed above the spent mushroom compost is a layer of peat which serves as casing soil for the purpose of keeping the moisture content optimal during cultivation of the mushrooms. Spent mushroom compost is generally distinguished from compost in that spent mushroom compost comprises not only vegetable material as compost does, but also comprises horse manure and/or chicken manure.

In current practice spent mushroom compost, i.e. mushroom compost remaining after the cultivation of mushrooms, is disposed of as fertilizer, in general together with casing soil placed on the spent mushroom compost for the purpose of cultivating mushrooms. The drawback of disposing of spent mushroom compost as fertilizer is that the product has a limited added value and that transport costs are moreover considerable.

GB 2 037 730 relates to method of producing a natural fertilizer for all cultivation purposes, comprising pounding and independently seeding organic residues, residues from mushroom growing and residues from bovine manure with aerobic bacteria, and allowing pre-fermentation of these products to take place independently of one another, subsequently admixing the pre-fermented residues with peat and poultry droppings, the admixture being pounded and spread out as a layer with thickness of the order of one meter to allow final fermentation to take place, after which the product is sieved before being packaged.

EP 0 801 043 relates to a production method of a soil conditioner comprising the steps of: cultivating a mushroom with a mushroom culture containing crushed grain shell as a primary component; and blending one or plurality of additives necessary for constituting a soil conditioner to a waste culture after cultivation of the mushroom, which includes an animal protein material.

German Offenlegungsschrift DE 35 11 718 relates to a method for the disinfection and stabilization of substrates used in mushroom cultures wherein by the admixture of carbon and nitrogen carriers from the harvested nutrient substrate, a rotatable mixture is formed which, by means of controlled rotting, is completely decontaminated, stabilized and converted into a usable compost by means of the bacterial activity during the rotting process.

CN 102 344 316 relates to a nutrition fertilizer prepared by crushing crop straw, mixing with rabbit manure and mushroom residue, adding urea by adjusting the carbon-nitrogen ratio to 1:20-1:40, stacking and fermenting in a fermentation tank. The fermented product is mixed with monopotassium phosphate, potassium sulfate, zinc sulfate, sodium molybdate, manganese sulfate and ammonia nitrate, tobacco is crushed to 1 cm sections, and coal residue, paclobutrazol, gibberellin and bentonite are added to the mixture, mixed, cooled, dried and granulated to obtain the final mixture.

JP 2000 327470 relates to a method for manufacturing fertilizer involving the steps of mixing organic substances, nitrogen fertilizer and potash fertilizer with the cultivation residue from mushroom culture bed. The mixture is fermented using a soil microorganism preferably thermophilus, under aerobic conditions.

International application WO 2012/101213 relates to a method for recycling used mushroom casing soil comprising mushroom waste residue, which method comprises the steps: providing a used mushroom casing soil, comprising mushroom waste residue, reducing the mean particle size of the mushroom waste residue to a mean particle size smaller than 6 mm, thereby providing reduced mushroom casing soil. Such a method further comprises the step of: subjecting the reduced mushroom casing soil to a temperature of 10°C to 50°C for a period of time enabling the aerobic growth of the added microorganisms, preferably for 40 to 80 hours, thereby providing selective mushroom casing soil, and further comprising the step of subjecting the reduced or selective mushroom casing soil to a temperature of 50°C to 80°C.

The present invention has for its object, among others, to provide a method for processing spent mushroom compost in order to thus make use of any added value of the spent mushroom compost.

This objective is achieved by composting spent mushroom compost in accordance with the appended claim 1.

This objective is more specifically achieved with a method for composting spent mushroom compost comprising of composting the spent mushroom compost, or used mushroom compost, preferably under conditions for providing composted spent mushroom compost with a dry matter content of 45% to 90%, preferably 55% to 75%. The present composted spent mushroom compost preferably has a dry matter content of 60 to 70%.

By composting spent mushroom compost a dry product is obtained with higher contents of N, P and K, and so a higher fertilizing value than the usual integral spent mushroom compost for marketing. The weight further decreases greatly due to drying, whereby the transport costs to market outlets are greatly decreased, as is the associated emission of CO₂.

The term 'composting' as referred to in the present context is understood to mean digestion of the spent mushroom compost under the influence of for instance bacteria and fungi, preferably under controlled conditions.

Calculations have moreover shown that there is so much residual heat released during the composting of the spent mushroom compost that it can provide for a considerable part of the heat requirement during the mushroom cultivation. Some of the heat can be made suitable for businesses in the vicinity such as a glass horticulturist/strawberry grower and asparagus grower.

In a preferred embodiment the present method therefore comprises a step for further use of heat obtained by composting the spent mushroom compost for cultivating mushrooms and/or crops or for other applications, optionally by heating a water circuit which can then be used to heat spaces for cultivating mushrooms and/or crops or for other applications. The present method therefore preferably comprises the use of heat obtained by composting the spent mushroom compost for the purpose of heating water and/or air via a heat exchanger, such as for instance an air/air heat exchanger.

In yet another preferred embodiment the hot air from the composting is mixed with air coming from outside the process, or fresh air, and circulated through the spent mushroom compost via perforations under the spent mushroom compost. This recirculation of heat from the composting process is advantageous for improving the efficiency of the composting of the spent mushroom compost.

In a preferred embodiment the present method comprises of adding a composting agent to the present spent mushroom compost during or prior to composting of the spent mushroom compost. The addition of composting agent provides the advantage that the composting process progresses more advantageously, wherein the composted spent mushroom compost also has improved properties such as increased concentrations of N, P and K. The term composting agent as used in the present context is understood to mean a composition which has a favourable effect on the process of composting spent mushroom compost.

In a further preferred embodiment the present ratio of spent mushroom compost and composting agent lies between 1:1 and 6:1, preferably between 1:1 and 3:1, such as between 2:1 and 3:1.

In a preferred embodiment said composting agent comprises manure or digestate, preferably a thick fraction of manure or digestate from a manure separator, such as for instance a thick fraction of pig manure.

In a preferred embodiment the method comprises the step of separating the spent mushroom compost from a casing soil prior to composting of the spent mushroom compost. This has the advantage that the casing soil as such can be used for further applications without being contaminated with spent mushroom compost. The compost heat released during composting of the spent mushroom compost is preferably used to dry the used casing soil. This produces a product consisting substantially of and greatly resembling peat. It is surprising that, optionally following additional conversion, the mushroom remnants such as mushroom stems can hardly or no longer be found in the resulting dried casing soil. The resulting dried casing soil can serve very well as peat substitute and thereby results in a considerable CO₂ reduction compared to the use of peat.

In a preferred embodiment the present method comprises of drying the casing soil for the purpose of providing dried casing soil with a dry matter content of 30% to 80%, preferably 40% to 60%. It has been found that the casing soil contracts much less than the starting material during drying, thereby greatly increasing suitability as potting compost ingredient.

In a preferred embodiment said spent mushroom compost is composted at a temperature of 30-85°C, preferably at a temperature of 40-65°C. Said spent mushroom compost is usually composted for a minimum period of time of 5 days, such as for instance of 5 to 15 days or of 6 or 7 to 12 days.

In a preferred embodiment the method comprises of supplying outside air to the space in which the composting takes place during composting of the spent mushroom compost, wherein the outside air is heated via a heat exchanger using heat obtained by composting the spent mushroom compost, so that efficient use can be made of the heat released during the composting, while the supplied air is meanwhile brought to proces temperature.

Considering the favourable properties of the composted spent mushroom compost, the present invention also relates to composted spent mushroom compost obtainable with the present method. Considering the favourable properties of the separated casing soil, the present invention also relates to dried casing soil obtained with the present invention.

According to another aspect, the present invention relates to composted spent mushroom compost comprising a dry matter content of 45% to 75%, a nitrogen content of 1% to 3% by weight, a phosphorus pentoxide (P₂O₅) content of 0.5% to 3% by weight and/or a potassium oxide content of 1% to 5% by weight. In a preferred embodiment said composted spent mushroom compost also comprises composted casing soil and/or composting agent, such as for instance pig manure.

According to yet another aspect, the present invention relates to the use of said composted spent mushroom compost as manure concentrate.

The invention is further described on the basis of the following non-limitative example, in which reference is made to the figures. In these figures:
Figure 1 shows the measured energy generation in MJ/hour (upper graph line) and the water evaporation in the discharged process air in kg/hour (lower graph line) for a duration of 7 days;
Figure 2 shows the measured temperatures in degrees Celsius for the duration of 7 days, wherein the upper graph line shows the temperature of the composting spent mushroom compost, the middle graph line shows the temperature of the discharged process air and the lower graph line shows the temperature of the supplied inblown air.

### Example 1

26000 kg of nutrient medium was separated after harvesting of mushrooms into 19760 kg of spent mushroom compost and 6240 kg of casing soil. The characteristics of the spent mushroom compost and casing soil are stated in table 1.

**Table 1**

| Characteristic | **Spent mushroom compost** (19760 kg) | **Casing soil** (6240 kg) |
|---|---|---|
| **Dry matter** (in kg) | 6552 | 1248 |
| **Organic matter** (in kg) | 3604 | 998 |
| **Water** (in kg) | 13208 | 4992 |
| **Volume** (in litres) | 36808 | 7800 |
| **Nitrogen content** (in gram/kg) | 6.5 | 1.0 |
| **P₂O₅** (in gram/kg) | 4.1 | 0.3 |
| **K₂O** (in gram/kg) | 11.2 | 0.8 |

The spent mushroom compost was composted for 10 days at a temperature of 40-65°C. The heat released during the composting was used to dry the casing soil and also to heat outside air which was supplied to the composting process via an air/air heat exchanger.

6849 kg of composted spent mushroom compost and 2496 kg of dried casing soil were then obtained. The characteristics of the obtained products are shown in table 2.

**Table 2**

| Characteristic | **Spent mushroom compost** (6849 kg) | **Casing soil** (2496 kg) |
|---|---|---|
| **Dry matter** (in kg) | 4452 | 1248 |
| **Organic matter** (in kg) | 1504 | 998 |
| **Water** (in kg) | 2397 | 1248 |
| **Volume** (in litres) | 11415 | 4992 |
| **Nitrogen content** (in gram/kg) | 18.8 | 2.5 |
| **P₂O₅** (in gram/kg) | 11.9 | 0.8 |
| **K₂O** (in gram/kg) | 32.3 | 2.0 |

### Example 2

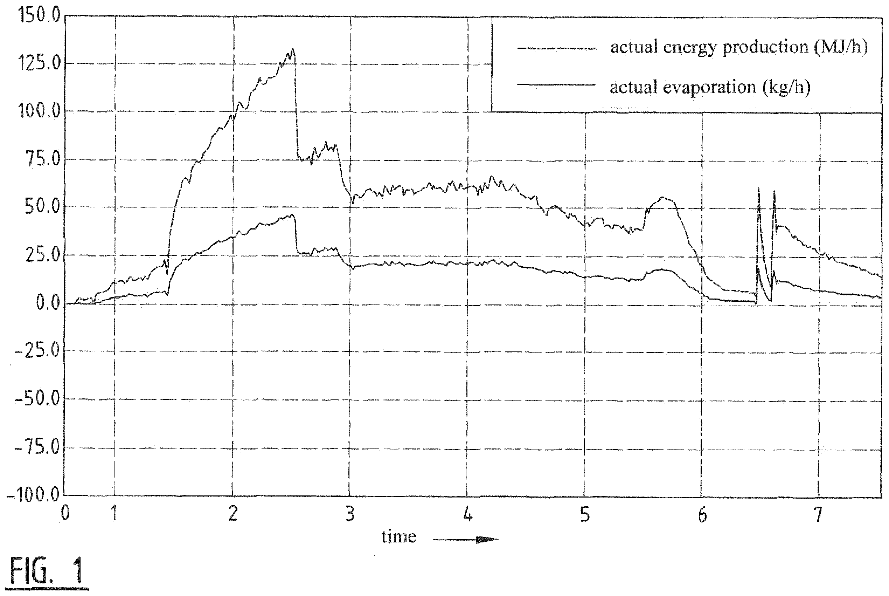

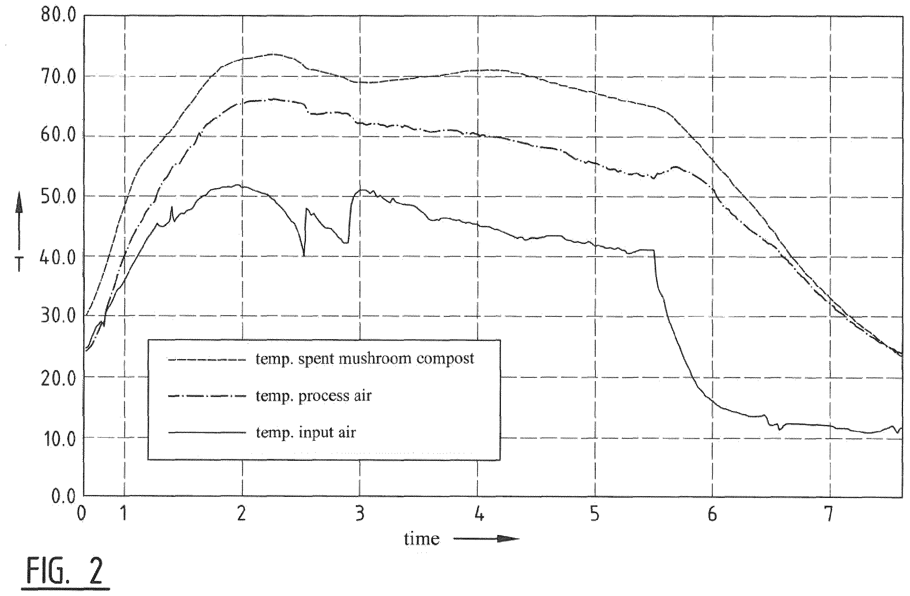

In a test setup consisting of a composting tunnel of sea container size with all the necessary provisions for aeration and data recording the following test was performed: 8000 kg of spent mushroom compost was mixed with 3000 kg of thick pig manure and 2000 kg of graft material from a previous batch. Total input was 13000 kg. The dry matter content of the mixture was determined at the start to be about 30%. The duration of the composting was 7 days. During the composting the spent mushroom compost was provided with air by means of air circulation through a perforated floor, wherein the inflowing air consisted partially of process air discharged from the composting tunnel. Resulting at the end was about 8000 kg of material with a dry matter content well above 50%. Figure 1 shows that the composting process has a positive energy production for 7 days, with a peak of over 125 MJ/hour. In addition, the drying capacity of the composting process was found to be favourable because the evaporation in kg/hour is positive for the whole duration. In short, spent mushroom compost can advantageously be used for composting processes because both the direct energy production (in MJ/hour) and the indirect energy production via the water vapour (in kg/hour) are favourable. Figure 2 shows that the temperature of the composting spent mushroom compost rises above 70°C. This is favourable because it achieves a sufficient degree of elimination of pathogens present in the spent mushroom compost. Figure 2 also shows that the temperature of the process air in the composting tunnel rises above 60°C. This is favourable because the heat present in this water vapour can be used to heat air and/or water via for instance a heat exchanger.

## Claims

1. Method for composting spent mushroom compost, wherein said spent mushroom compost is separated from a casing soil prior to composting of said spent mushroom compost, said method comprising of composting said spent mushroom compost under conditions for providing composted spent mushroom compost with a dry matter content of 45% to 90%, wherein said spent mushroom compost is composted at a temperature of 30-85°C, for a minimum period of time of 5 days.

2. Method as claimed in claim 1, wherein said composted spent mushroom compost is provided with a dry matter content of 55% to 75%, wherein said spent mushroom compost is composted preferably at a temperature of 40-65°C.

3. Method as claimed in any of the claims 1-2, wherein a composting agent is added to the spent mushroom compost during or prior to composting of the spent mushroom compost.

4. Method as claimed in any of the claims 1-3, wherein the ratio of spent mushroom compost and composting agent lies between 1 : 1 and 6: 1, preferably between 1 : 1 and 3: 1.

5. Method as claimed in claim 3 or claim 4, wherein the composting agent comprises manure or digestate, preferably a thick fraction of manure or digestate from a manure separator.

6. Method as claimed in claim 1, further comprising of drying the casing soil for the purpose of providing dried casing soil with a dry matter content of 30% to 80%, preferably 40% to 60%.

7. Method as claimed in claim 6, wherein the casing soil is dried using heat obtained by composting the spent mushroom compost.

8. Method as claimed in any of the claims 1-7, wherein heat obtained by composting the spent mushroom compost is further used for cultivating mushrooms and/or crops or for other applications.

9. Method as claimed in any of the claims 1-8, wherein during composting of the spent mushroom compost outside air is supplied to the space in which the composting takes place, wherein the outside air is heated via a heat exchanger using heat obtained by composting the spent mushroom compost.

10. Method as claimed in any of the claims 1-9, wherein heat obtained by composting the spent mushroom compost is further used for heating water via a heat exchanger.

11. Composted spent mushroom compost obtainable with the method as claimed in any of the claims 1-10 and having a dry matter content of 45% to 90%.

12. Composted spent mushroom compost comprising a dry matter content of 45% to 75%, a nitrogen content of 1% to 3% by weight, a phosphorus pentoxide (P₂O₅) content of 0.5% to 3% by weight and/or a potassium oxide content of 1% to 5% by weight.

13. A method of drying used casing soil, wherein said method comprises separating used casing soil from spent mushroom compost and composting said spent mushroom compost, wherein compost heat released during said step of composting is used to dry the used casing soil to a dry matter content of 30% to 80%.

14. Use of the composted spent mushroom compost as claimed in claim 11 or claim 12 as manure concentrate.

## Patentansprüche

1. Verfahren zum Kompostieren verbrauchten Pilzsubstrats, das vor seiner Kompostierung von der Deckerde getrennt worden ist, wobei dieses Verfahren das Kompostieren dieses verbrauchten Pilzsubstrats unter Bedingungen, unter welchen ein kompostiertes verbrauchtes Pilzsubstrat mit einem Trockensubstanzgehalt von 45 % bis 90 % erzeugt wird, umfasst und dieses verbrauchtes Pilzsubstrat eine Mindestdauer von 5 Tagen bei einer Temperatur von 30 bis 85 °C kompostiert wird.

2. Verfahren nach Anspruch 1, wobei das kompostierte verbrauchte Pilzsubstrat mit einem Trockensubstanzgehalt von 55 % bis 75 % erzeugt wird, wobei dieses verbrauchte Pilzsubstrat vorzugsweise bei einer Temperatur von 40 bis 65 °C kompostiert wird.

3. Verfahren nach Anspruch 1 oder 2, wobei dem verbrauchten Pilzsubstrat vor oder während des Kompostierens ein Kompostiermittel zugesetzt wird.

4. Verfahren nach einem der Ansprüche 1 bis 3, wobei das Verhältnis von verbrauchtem Pilzsubstrat zu Kompostiermittel zwischen 1 : 1 und 6 : 1 und vorzugsweise zwischen 1 : 1 und 3 : 1 beträgt.

5. Verfahren nach Anspruch 3 oder 4, wobei das Kompostiermittel Dung oder Gärrückstand, vorzugsweise eine dicke Fraktion von Dung oder Gärrückstand, aus einem Dungseparator umfasst.

6. Verfahren nach Anspruch 1, das weiterhin die Trocknung der Deckerde zum Zweck des Erhaltens einer getrockneten Deckerde mit einem Trockensubstanzgehalt von 30 % bis 80 %, vorzugsweise 40 % bis 60 %, umfasst.

7. Verfahren nach Anspruch 6, wobei die Deckerde unter Anwendung von Wärme, die durch Kompostieren des verbrauchten Pilzsubstrats erzeugt worden ist, getrocknet wird.

8. Verfahren nach einem der Ansprüche 1 bis 7, wobei die Wärme, die durch Kompostieren des verbrauchten Pilzsubstrats erzeugt worden ist, ferner zum Züchten von Pilzen und/oder Feldfrüchten oder für andere Anwendungen verwendet wird.

9. Verfahren nach einem der Ansprüche 1 bis 8, wobei während des Kompostierens des verbrauchten Pilzsubstrats in den Raum, in welchem das Kompostieren stattfindet, Außenluft zugeführt wird, die unter Verwendung der Wärme, die durch das Kompostieren des verbrauchten Pilzsubstrats erzeugt worden ist, über einen Wärmetauscher erwärmt wird.

10. Verfahren nach einem der Ansprüche 1 bis 9, wobei die Wärme, die durch Kompostieren des verbrauchten Pilzsubstrats erzeugt worden ist, darüber hinaus zum Erwärmen von Wasser über einen Wärmetauscher verwendet wird.

11. Kompostiertes verbrauchtes Pilzsubstrat, erhältlich aus dem Verfahren nach einem der Ansprüche 1 bis 10 und welches einen Trockensubstanzgehalt von 45 % bis 90 % besitzt.

12. Kompostiertes verbrauchtes Pilzsubstrat, das einen Trockensubstanzgehalt von 45 % bis 75 %, einen Stickstoffgehalt von 1 Gew.-% bis 3 Gew.-%, einen Phosphorpentoxid-(P₂O₅-)Gehalt von 0,5 Gew.-% bis 3 Gew.-% und/oder einen Kaliumoxidgehalt von 1 Gew.-% bis 5 Gew.-% umfasst.

13. Ein Verfahren zur Trocknung verbrauchter Deckerde, wobei das Verfahren die Trennung der verbrauchten Deckerde von dem verbrauchten Pilzsubstrat und Kompostierung dieses verbrauchten Pilzsubstrats umfasst, wobei die Kompostwärme, die während dieser Kompostierungsstufe erzeugt wird, zum Trocknen der verbrauchten Deckerde bis auf einen Trockensubstanzgehalt von 30 % bis 80 % verwendet wird.

14. Verwendung des kompostierten verbrauchten Pilzsubstrats nach Anspruch 11 oder 12 als Düngerkonzentrat.

## Revendications

1. Procédé de compostage d'un compost de champignon usé, dans lequel ledit compost de champignon usé est séparé d'une terre de gobetage avant le compostage dudit compost de champignon usé, ledit procédé comprenant le fait de composter ledit compost de champignon usé dans des conditions permettant d'obtenir un compost de champignon usé composté ayant une teneur en matière sèche allant de 45% à 90%, où ledit compost de champignon usé est composté à une température allant de 30 à 85°C, pendant une durée minimale de 5 jours.

2. Procédé tel que revendiqué dans la revendication 1, dans lequel ledit compost de champignon usé composté est pourvu d'une teneur en matière sèche allant de 55% à 75%, dans lequel ledit compost de champignon usé est composté de préférence à une température allant de 40 à 65°C.

3. Procédé tel que revendiqué dans l'une des revendications 1 et 2, dans lequel un agent de compostage est ajouté au compost de champignon usé pendant ou avant le compostage du compost de champignon usé.

4. Procédé tel que revendiqué dans l'une des revendications 1 à 3, dans lequel le rapport du compost de champignon usé et de l'agent de compostage est compris entre 1 : 1 et 6 : 1, de préférence entre 1 : 1 et 3 : 1.

5. Procédé tel que revendiqué dans la revendication 3 ou 4, dans lequel l'agent de compostage comprend du fumier ou du digestat, de préférence une fraction épaisse de fumier ou de digestat provenant d'un séparateur de fumier.

6. Procédé tel que revendiqué dans la revendication 1, comprenant en outre le fait de sécher la terre de gobetage dans le but de fournir une terre de gobetage séchée ayant une teneur en matière sèche allant de 30% à 80%, de préférence de 40% à 60%.

7. Procédé tel que revendiqué dans la revendication 6, dans lequel la terre de gobetage est séchée en utilisant de la chaleur obtenue par compostage du compost de champignon usé.

8. Procédé tel que revendiqué dans l'une des revendications 1 à 7, dans lequel la chaleur obtenue par compostage du compost de champignon usé est en outre utilisée pour cultiver des champignons et/ou des cultures ou pour d'autres applications.

9. Procédé tel que revendiqué dans l'une des revendications 1 à 8, dans lequel, pendant le compostage du compost de champignon usé, de l'air extérieur est fourni à l'espace dans lequel le compostage a lieu, dans lequel l'air extérieur est chauffé via un échangeur de chaleur en utilisant de la chaleur obtenue par compostage du compost de champignon usé.

10. Procédé tel que revendiqué dans l'une des revendications 1 à 9, dans lequel la chaleur obtenue par compostage du compost de champignon usé est en outre utilisée pour chauffer l'eau via un échangeur de chaleur.

11. Compost de champignon usé composté susceptible d'être obtenu par le procédé tel que revendiqué dans l'une des revendications 1 à 10 et ayant une teneur en matière sèche allant de 45% à 90%.

12. Compost de champignon usé composté comprenant une teneur en matière sèche allant de 45% à 75%, une teneur en azote allant de 1% à 3% en poids, une teneur en pentoxyde de phosphore (P₂O₅) allant de 0,5% à 3% en poids et/ou une teneur en oxyde de potassium allant de 1% à 5% en poids.

13. Procédé de séchage d'une terre de gobetage utilisée, dans lequel ledit procédé comprend le fait de séparer la terre de gobetage utilisée du compost de champignon usé et de composter ledit compost de champignon usé, où la chaleur de compost libérée pendant ladite étape de compostage est utilisée pour sécher la terre de gobetage utilisée jusqu'à l'obtention d'une teneur en matière sèche allant de 30% à 80%.

14. Utilisation du compost de champignon usé composté tel que revendiqué dans la revendication 11 ou 12 en tant que concentré de fumier.
